# EUROPEAN PATENT APPLICATION

(11) **EP 4 349 634 A1**
(43) Date of publication of application: **10.04.2024**
(21) Application number: 23196591.4
(22) Date of filing: 11.09.2023
(51) Int. Cl.: B60L 1/00, B60L 53/14, B60L 53/62, B60L 53/80, B60L 58/12, B60L 58/13, B60L 58/22, H02J 7/00, B60L 1/02, B60L 50/51, B60L 53/24, B60L 58/21, G01R 31/387

(54) **ENERGY STORAGE DEVICE CONDITIONING SYSTEMS AND METHODS**

(30) Priority: 06.10.2022 US 202263413763 P; 06.09.2023 US 202318462115
(71) Applicant: Transportation IP Holdings, LLC, Norwalk, CT 06851 (US)
(72) Inventor: KUMAR, Ajith Kuttannair, Norwalk, CT, 06851 (US); WORDEN, Bret, Norwalk, CT, 06851 (US)
(74) Representative: Laufhütte, Dieter

(57) **Abstract**

A system and method are provided that may identify a first battery pack (118) to be removed from a vehicle (104) based at least in part on a measured state of charge. The first battery pack (118) and/or a replacement battery pack (118) may be conditioned by changing the state of charge of the first battery pack (118) or the replacement battery (118), and/or connecting a bypass connector (200) with the replacement battery pack (118) between the replacement battery pack (118) and a power source (112, 122) that also is connected with the one or more other battery packs (118) on the vehicle (104). The bypass connector (200) may bypass charging energy from the power source (112, 122) to the replacement battery pack (118) while the power source (112, 122) charges the one or more other battery packs (118) to increase the state of charge of the one or more other battery packs (118) toward the state of charge of the replacement battery pack (118).

## Description

### CROSS-REFERENCE TO RELATED APPLICATIONS

This application claims priority to U.S. Patent Application No. 18/462,115 (filed 06-September-2023), which claims priority to U.S. Provisional Application No. 63/413,763 (filed 06-October-2022), the entire disclosures of which are incorporated herein by reference.

### BACKGROUND

### Technical Field.

The subject matter described herein relates to systems and methods that condition energy storage devices for use by loads, such as vehicles or stationary loads.

### Discussion of Art.

Some energy storage systems use many energy storage devices such as battery packs to power loads of powered systems. These powered systems may include vehicles such as locomotives or automobiles. The energy storage devices may be connected in series and/or parallel to form strings of the energy storage devices. Many of these strings may be connected in parallel to form an energy storage bank. Several of these banks may then be used to form an energy storage system that powers large loads of the powered systems.

Packs may fail within the energy storage system. But replacing a failed pack with a pack that is in a different state or condition can risk damage to the energy storage packs and/or loads of the powered system. Some known energy storage systems rely on external conditioning devices, which can be cumbersome and require costly investment and safety precautions. It may be desirable to have a system and method that differs from those that are currently available.

### BRIEF DESCRIPTION

A method is provided that may include identifying a first battery pack of plural battery packs to be removed from a vehicle based at least in part on a measured state of charge of the first battery pack, and conditioning one or more of the first battery pack for removal from the vehicle or a replacement battery pack for installation on the vehicle by one or more of (a) changing the state of charge of the first battery pack or the replacement battery pack to be closer to the state of charge of one or more other battery packs of the vehicle or closer to a threshold state of charge, and/or (b) connecting a bypass connector with the replacement battery pack between the replacement battery pack and a power source that also is connected with the one or more other battery packs on the vehicle. The bypass connector may bypass one or more of (c) charging energy from the power source to the replacement battery pack while the power source charges the one or more other battery packs to increase the state of charge of the one or more other battery packs toward the state of charge of the replacement battery pack, and/or (d) discharging energy from the replacement battery pack to a load of the vehicle while the one or more other battery packs discharge energy to the load of the vehicle to reduce the state of charge of the one or more other battery packs toward the state of charge of the replacement battery pack.

A conditioning system also is provided that may include a controller that can measure a state of charge of battery packs onboard a vehicle and identify a first battery pack of the battery packs to be removed from the vehicle and replaced with a replacement battery pack, and a conditioning device that may change a state of charge of one or more of the first battery pack for removal from the vehicle or the replacement battery pack for installation on the vehicle, the conditioning device configured to change the state of charge of the first battery pack or the replacement battery pack to be closer to the state of charge of one or more other battery packs of the battery packs onboard the vehicle or closer to a threshold state of charge.

Another conditioning system also is provided that may include a controller that can measure a state of charge of battery packs onboard a vehicle and identify a first battery pack of the battery packs to be removed from the vehicle and replaced with a replacement battery pack, and a conditioning device that may change a state of charge of one or more of the first battery pack for removal from the vehicle or the replacement battery pack for installation on the vehicle. The conditioning device may change the state of charge of the first battery pack or the replacement battery pack to be closer to the state of charge of one or more other battery packs of the battery packs onboard the vehicle or closer to a threshold state of charge. The conditioning device may include one or more of a bypass connector, a conditioning connector, an external charging device, an external passive conditioner device, an active passive conditioner device, and/or an off-board conditioner device.

### BRIEF DESCRIPTION OF THE DRAWINGS

The subject matter may be understood from reading the following description of non-limiting embodiments, with reference to the attached drawings, wherein below:
Figure 1 illustrates one example of an energy storage device conditioning system;
Figure 2 schematically illustrates one example of operation of the conditioning system shown in Figure 1;
Figure 3 illustrates an example of the conditioning system shown in Figure 1 used with a bypass connector to condition companion battery packs;
Figure 4 schematically illustrates another example of operation of the conditioning system shown in Figure 1;
Figure 5 schematically illustrates another example of operation of the conditioning system shown in Figure 1;
Figure 6 schematically illustrates another example of operation of the conditioning system shown in Figure 1;
Figure 7 schematically illustrates another example of operation of the conditioning system shown in Figure 1;
Figure 8 schematically illustrates another example of operation of the conditioning system shown in Figure 1;
Figure 9 schematically illustrates another example of operation of the conditioning system shown in Figure 1; and
Figure 10 illustrates a flowchart of one example of a method for conditioning one or more energy storage packs.

### DETAILED DESCRIPTION

Embodiments of the subject matter described herein relate to energy storage device conditioning systems and methods. The conditioning systems and methods can change a state of charge of an energy storage pack that is to be replaced, the state(s) of charge of other energy storage packs that are not being replaced but that are connected with an energy storage pack being replaced, and the like. The conditioning systems and methods can help to bring the energy storage packs (existing and replacement) to states of charge or voltage that are close to each other (e.g., within a configurable threshold difference, such as with 1% charge of each other, within 3% charge of each other, or another limit) prior to powering a powered system with the energy storage packs.

Powered systems that may be powered by the energy storage systems that are conditioned by the conditioning systems and methods. These powered systems can include mobile powered systems, such as vehicles (e.g., rail vehicles, automobiles, trucks (with or without trailers), buses, marine vessels, aircraft, mining vehicles, agricultural vehicles, or other off-highway vehicles, or the like. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy). Optionally, the powered systems may be stationary systems, such as stationary power sources for loads.

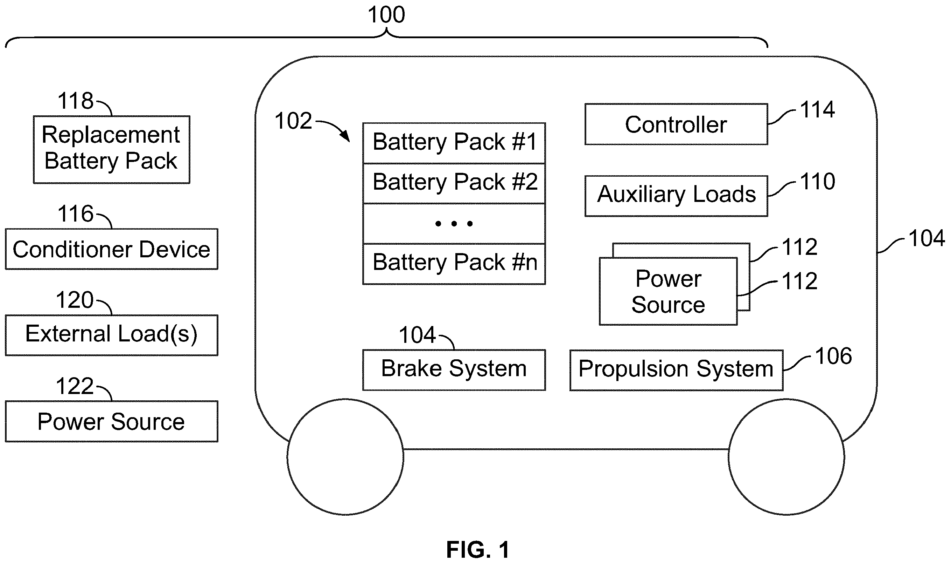

Figure 1 illustrates one example of an energy storage device conditioning system 100. The conditioning system may be used to condition or change the states of one or more energy storage packs 102 used to power loads of a powered system 104. Each of the energy storage packs can represent one or more energy storage devices connected in series and/or parallel with each other. For example, several battery cells or devices, capacitors (or ultracapacitors), or the like, can be connected with each other in series and/or parallel in each pack. The packs may be connected with each other in series and/or parallel to meet the demands of the loads of the powered system. The packs are labeled as "Battery Pack #1," "Battery Pack #2," "...," and "Battery Pack #n" in Figure 1 to represent the energy storage packs. While at least four battery packs are shown Figure 1, one or more examples of the powered system may include fewer battery packs or more battery packs. While the energy storage packs are referred to herein as battery packs, not all embodiments are limited to batteries. For example, one or more of the embodiments described herein may be used in connection with other types of energy storage devices, such as capacitors or ultracapacitors.

The powered system can be a mobile or stationary system. For example, the powered system may represent one or more vehicles able to propel themselves or be propelled along one or more routes. With respect to stationary systems, the powered system can represent a stationary system having one or more loads that are powered by the battery packs. With respect to the powered system shown Figure 1, the powered system may be a mobile powered system having a propulsion system 106 and a brake system 108. The propulsion system can represent one or more propulsive devices that generate effort to move the powered system, such as one or more motors. The brake system can represent one or more brake devices, such as one or more friction brakes, air brakes, or dynamic brakes (for example, one or more voters of the propulsion system), etc. The powered system can include one or more auxiliary loads 110. With respect to mobile powered systems, the auxiliary loads can represent devices that consume electric energy, but not for purposes of moving or propelling the powered system, such as resistors, blower fans, heating and/or air conditioning ventilation systems, etc.

The conditioning system optionally can include one or more onboard power sources 112. The onboard power sources may be disposed in or on the powered system and can generate electric energy for conditioning one or more energy storage packs as described herein. The onboard power sources can represent fuel cells, other battery packs, an alternator, a generator, or the like. Alternatively, at least one power source 122 may be off-board or outside of the powered system. This external or off-board power source optionally can be referred to as an external charger or charging device.

The conditioning system and/or the powered system optionally can include a controller 114. This controller can represent hardware circuitry that includes and/or is connected with one or more processors that carry out the operations of the controller, conditioning system, and/or powered system. For example, the controller can represent one or more microprocessors, integrated circuits, field programmable gate arrays, or the like.

The conditioning system optionally can include a conditioner device 116 that can be used to condition the battery packs as described herein. As described below in connection with one or more examples of the conditioning system described herein, the conditioner device can be off board or outside of the powered system and can be used to change the state or condition of one or more of the energy storage packs as described herein. Alternatively, the conditioner device may be onboard the powered system. The conditioning system optionally can include an external load 120, such as an electrical load that is off-board or outside of the powered system. This load can be powered with energy from one or more of the packs to condition the packs, as described herein.

One or more of the energy storage packs may need to be replaced with a replacement energy storage pack 118. The energy storage pack that is to be replaced can be referred to as a replaced energy storage pack. This replacement can occur when the replaced energy storage pack has aged, lost capacity, failed, is unable to charge above a designated state of charge, is unable to be maintained at least a designated lower temperature threshold, is unable to remain below a designated upper temperature threshold, or the like. The energy storage packs may be high-voltage storage devices in that the energy storage packs may provide hundreds or thousands of joules of energy to power the loads of the powered system. As a result, the replaced energy storage pack may not be able to be just simply removed with a replacement energy storage pack inserted in place.

If the state or condition of the replacement energy storage pack differs from the states or conditions of other energy storage packs to which the replacement energy storage pack will be connected (referred to as companion storage packs) by too much, there may be a risk of degraded system performance, electrical damage, or the like. One or more examples of the conditioning systems and methods described herein can change the state or condition of the replacement energy storage pack, one or more companion energy storage packs, or both the replacement energy storage pack and the companion energy storage packs. The states or conditions of energy storage packs that can be changed include states of charge of energy storage packs, voltages of charge of the energy storage packs, temperatures of the energy storage pack, or the like. While different examples of operation of the conditioning systems are provided herein, in one example, multiple or all the different types of operation may be performed by the same conditioning system.

The controller can identify a battery pack of the several battery packs of the powered system that is to be removed from the powered system and replaced with the replacement battery pack. This identification can occur based on a measured state of charge of the battery packs. For example, the controller can include and/or be connected with one or more sensors that can directly (or indirectly) measure or use algorithms to determine characteristics (e.g., voltages, SOCs, temperatures, age, remaining useful or service life, etc.) of the battery packs. If one or more of the battery packs have a characteristic that deviates from the other battery packs and/or is outside of an acceptable range, then the controller may identify that or those battery packs for replacement. Optionally, the controller may receive input from an operator of the powered system and/or the conditioning system to identify which battery pack(s) to condition or replace.

The conditioning system can then condition one or more of the battery packs by changing the state or condition of the battery pack(s). The state or condition that is changed can be the state of charge of the battery pack(s), but optionally may be a voltage level, capacity, temperature, etc. of the battery pack(s). The conditioning system can condition the battery pack(s) by changing the state of charge of the replaced battery pack, the replacement battery pack, and/or the companion battery packs to be closer to the state of charge of the companion battery packs of the vehicle or closer to a threshold state of charge. For example, the conditioning system can increase the state of charge of the replacement battery pack, decrease the state of charge of the replacement battery pack, increase the state of charge of the companion battery packs, and/or decrease the state of charge of the companion battery packs.

The conditioning system may be used to condition battery packs for replacement, but optionally can be used to condition battery packs without replacing a battery pack. For example, one or more battery packs may have a state or condition that is to be changed to match a state or condition of other battery packs without replacing or removing any battery packs from the powered system.

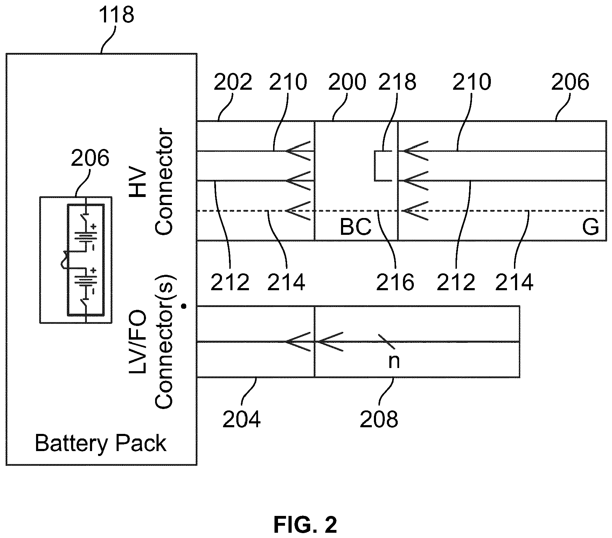

Figure 2 schematically illustrates one example of operation of the conditioning system shown in Figure 1. The conditioner device shown in Figure 1 may be or include a bypass connector 200 shown in Figure 2. The bypass connector is used to isolate either the replacement pack or the companion pack(s) from the conditioning operation (e.g., charging or discharging energy) that is used to bring the states of charge of the replacement pack and the companion packs closer together. Once this has been accomplished, the bypass connector is removed.

The replacement and replaced battery packs may include pack side connectors 202, 204 that represent conductive connections or terminals used to conductively couple the battery packs with the power source and/or loads of the powered system. The pack side connectors can include higher voltage connectors 202 and lower voltage or control connectors 204. The higher voltage connectors can be used to conduct electric energy for powering loads and/or charging one or more battery cells 206 inside the pack. The lower voltage or control connectors can be used to conduct lower voltages or current than the higher voltage connectors, such as connections used to conduct control signals, sensor reading signals, etc.

The powered system may include system side connectors 206, 208 that mate with the pack side connectors. The system side connectors can include higher voltage connectors 206 and lower voltage or control connectors 208. The higher voltage connectors can be used to conduct electric energy for powering loads and/or charging battery cells inside the pack. The lower voltage or control connectors can be used to conduct lower voltages or current than the higher voltage connectors, such as connections used to conduct control signals, sensor reading signals, etc. While the pack side and system side connectors are shown as connected with the replacement battery pack in Figure 2, the same connectors may be provided and connect with each other in the replaced battery packs and/or the companion battery packs.

The controller may disconnect power sources from the battery packs of the powered system automatically or by directing an operator to disconnect the power sources. For example, the controller may open switches, shut down the onboard power source, or the like, to stop conduction of electric energy (e.g., voltage and/or current) to the replaced and companion battery packs onboard or in the powered system. The replaced battery pack can be removed (e.g., disconnected and dismounted) from the powered system. The replacement battery pack can then be installed in the powered system. For example, the replacement battery pack can be mounted in the same (or different) location as the replaced battery pack. The lower voltage or control connectors of the pack side connectors can then be mated with the lower voltage or control connectors of the system side connectors. This can allow for lower voltage or control signals to be conducted between the controller and the replacement battery pack. These lower voltage or control signals may not include high voltage signals, such as signals that are less than twelve volts, signals that are less than fifty volts, signals that are less than one hundred volts, or signals that are less voltage than the energy conducted to power traction motors of the powered system. These control signals may be used by the control system to measure the replacement pack state.

The bypass connector can then be coupled with the higher voltage connectors of the pack side connectors without connecting the bypass connector with the higher voltage connectors of the system side connectors. This can help ensure that no energy from a power source is conducted through the higher voltage connectors to the replacement battery pack to avoid changing the state of charge of the replacement battery pack and to avoid exposing an operator to unsafe higher voltages.

As shown, the higher voltage connectors include several conductive pathways 210, 212, 214. While only three conductive pathways are shown, alternatively a greater or fewer number of pathways may be included in the pack side and/or system side higher voltage connectors. The pathways 210, 212 may be pathways used to conduct energy for discharging from the battery cells and/or for charging the battery cells. The pathways 214 may be used to connect the battery pack to an electrical ground reference, such as the chassis of a vehicle, a route (e.g., rail) on which the vehicle is moving, the earth ground reference, or the like.

The bypass connector may include a ground conductive pathway 216 that mates with and establishes a conductive pathway with the ground conductive pathways 214 of the pack side and system side higher voltage connectors. The bypass connector may include a bypass conductive pathway 218 that conductively couples the conduction pathways 210, 212 of the system side connector which each other, but that does not conductively couple the conduction pathways of the system side connector with the conduction pathways 210, 212 of the pack side connector. This can prevent the energy supplied from a power source (e.g., the onboard power source or a power source that is outside of the powered system) from being conducted to the cells of the replacement battery pack and/or can prevent energy stored in the cells of the replacement battery pack from being conducted to loads of the powered system.

The bypass connector can allow the controller to continue monitoring the replacement pack via signals communicated via the lower voltage or control conductive pathways in the pack side and system side connectors, while preventing the cells in this pack from discharging or being charged. The controller can then balance the companion packs and the replacement pack. For example, if the companion packs of the powered system are at a reduced state of charge relative to the replacement pack, then the controller can direct the onboard power source or an off-board power source to conduct voltage or current to the cells of the companion packs to increase the state of charge of the companion packs. This state of charge can be increased until the states of charge of the companion packs and the replacement pack are the same or within a threshold difference of each other.

If the companion packs of the powered system are at a greater state of charge than the replacement pack, then the controller can direct one or more load(s) to receive voltage or current out of the cells of the companion packs to the load(s) to decrease the state of charge of the companion packs (as described below). This state of charge can be decreased until the states of charge of the companion packs and the replacement pack are the same or within a threshold difference of each other.

The charging or discharging of the companion packs can occur with the pack side and system side connectors mated with each other for the companion packs, and without the bypass connector being connected to the companion packs. Optionally, one or more of the companion packs may need to have a state of charge increased or decreased to match that of the replacement pack and/or other companion packs. A bypass connector can be used to adjust the state of charge of this companion pack to match the state of charge of the other companion packs and/or the replacement pack.

The controller can then disconnect and/or deactivate the power sources and/or the loads from the companion packs and the bypass connector to keep the environment safe for operators. The bypass connector can then be removed from between the pack side connector and the system side connector of the replacement pack. The system side connector can be mated with the pack side connector of the replacement pack with the bypass connector removed. For example, the conductive pathway 210 in the system side connector can mate with the conductive pathway 210 in the pack side connector, the conductive pathway 212 in the system side connector can mate with the conductive pathway 212 in the pack side connector, and the conductive pathway 214 in the system side connector can mate with the conductive pathway 214 in the pack side connector. The power source(s) and/or loads can then be connected or activated so that the power source(s) can conduct energy to the companion packs and the replacement packs via the higher voltage pack side and system side connectors, and the companion packs and the replacement packs can conduct stored energy to the loads via the higher voltage pack side and system side connectors.

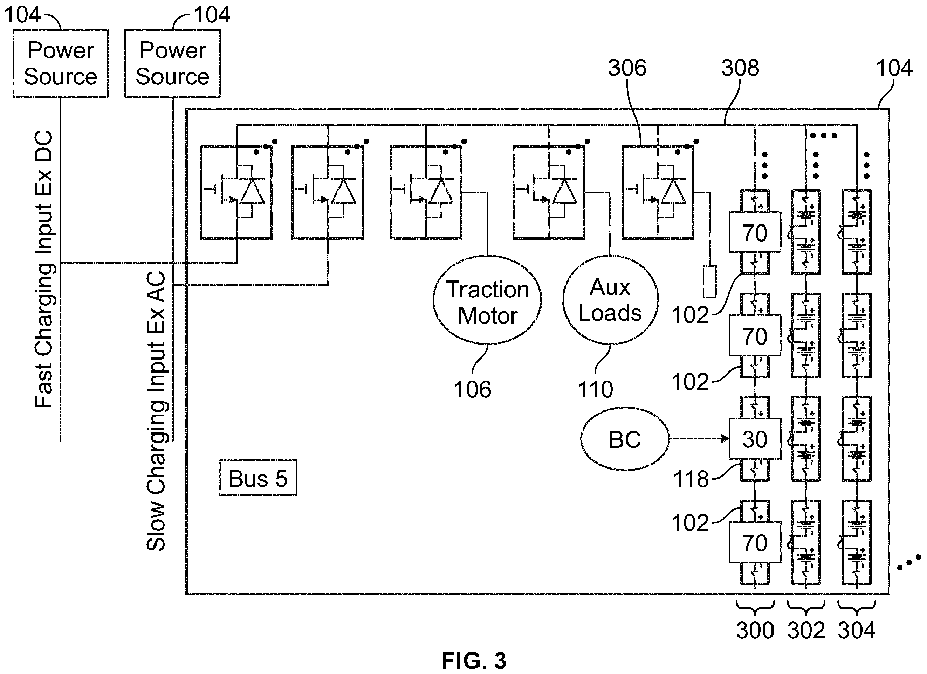

Figure 3 illustrates an example of the conditioning system shown in Figure 1 used with the bypass connector to condition the companion battery packs. In the illustrated example, the replacement battery pack may be positioned in the same location in a string 300 of battery packs as a replaced battery pack. The replacement battery pack may have a state of charge of 30%, while the companion battery packs in the same string have states of charge of 70%. The string (and additional strings 302, 304 of battery packs) may be conductively coupled with the propulsion system (e.g., "Traction Motor" in Figure 3) and/or the auxiliary loads of the powered system via one or more switching devices 306, such as one or more switches, insulated gate bipolar transistors, etc. The controller can control the states of the switching devices to alternate between closed and open states to control conduction of electric energy between (a) the battery packs and (b) the loads and/or power source(s). In one example, one of the power sources may be a faster charging power source and another power source may be a slower charging power source.

In operation, the controller can identify the replaced pack, control the switching devices to disconnect the power sources and loads from the battery packs in at least the string that includes the replaced battery pack, remove the replaced battery pack, and install the replacement battery pack with the bypass connector ("BC") in Figure 3 between the power source(s) and the replacement pack, or between the switching devices and the replacement pack. Figure 3 shows which pack has the bypass connector installed as described above in connection with Figure 2.

The companion packs may remain coupled with a bus 308 of the powered system (e.g., which connects the packs with the propulsion system and/or the auxiliary loads) by the pack side and system side connectors, and by the switching devices. The companion packs may be directed or controlled by the controller to discharge energy to one or more of the propulsion system and/or the auxiliary loads, such as by conducting energy from the companion packs to one or more choppers, the traction motor(s), dynamic resistive braking grids, other auxiliary loads, or the like. This may continue until the state of charge of these companion packs is the same as the replacement pack or is within the threshold difference of the state of charge of the replacement pack.

As another example, the companion packs may be discharged by directing energy out of the companion packs to another string of the packs to charge the packs in the other string. An inverter may be disposed between the first string that includes the replacement and companion packs and the second string having the packs that will be charged. Energy from the companion packs in the first string can be directed to the packs in the second string via this inverter until the states of charge of the packs in each string are closer together or the same, or until the states of charge of the packs in the different strings are closer together or the same. Optionally, the companion packs may be discharged by directing energy out of the companion packs to the external load(s) that is outside of or off-board the powered system. Examples of external loads can include maintenance alternating current (AC) chargers, direct current (DC) chargers, or the like.

If the companion packs are to be charged to increase the states of charge of the companion packs to match or be closer to the replacement pack, then the companion packs may be charged under direction of the controller. For example, the replacement pack may have a greater state of charge (e.g., 30%) than the companion packs in the same string (e.g., 10% each). The controller can direct the traction motor(s) of the propulsion system to generate charging current directed to the companion packs (e.g., via dynamic braking while the powered system is moving), by directing energy from the packs in another string to one or more inverters and then to the companion packs needing to be charged, by charging the companion packs with energy from an off-board power source, and/or by charging the companion packs with energy from the onboard source. This can increase the state of charge of the companion packs while not changing the state of charge of the replacement pack so that the companion packs have the same or similar (within the threshold difference) state of charge as the replacement pack.

The bypass connector can be removed from the replacement pack or the companion packs responsive to the states of charge of the replacement pack and the companion packs (at least in the same string as the replacement pack) being brought closer together or to a same value. The replacement pack or companion packs can then be connected to the same string and used to power the loads and/or be charged.

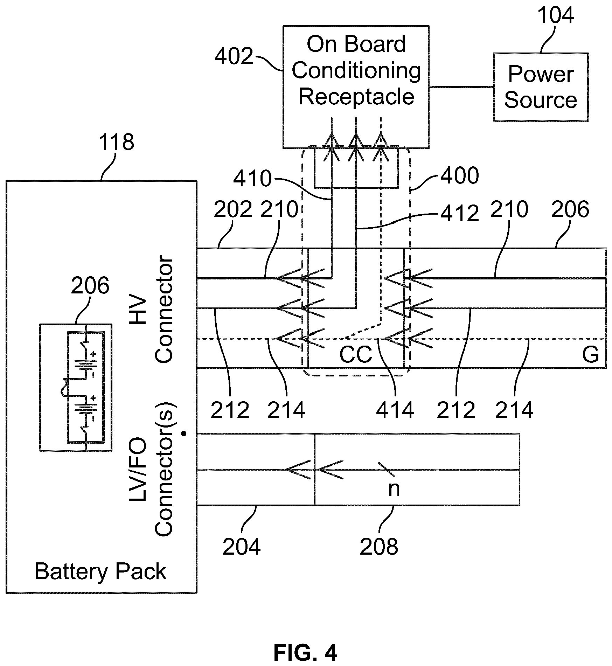

Figure 4 schematically illustrates another example of operation of the conditioning system shown in Figure 1. The conditioner device shown in Figure 1 may be or include a conditioning connector 400 and/or a conditioning receptacle 402 shown in Figure 4, which may be onboard or inside the powered system. The conditioning connector may include conductive pathways 410, 412, 414. The conductive pathways 410, 412 may be referred to as charge-carrying and/or higher voltage pathways that connect with corresponding charge-carrying pathways in the pack side connector. The conductive pathway 414 may connect with the grounding pathway of the pack side connector and the grounding pathway of the system side connector. The conductive pathways 410, 412 can conduct voltage or current while the conductive pathway 414 can be a grounding pathway that connects with a ground reference similar or identical to the pathway 216 described above.

The conditioning receptacle may be disposed onboard or inside the powered system and may be conductively coupled with the onboard power source(s) of the powered system. The conditioning receptacle can include separate conductive pathways that mate or couple with the conductive pathways of the conditioning connector when the conditioning receptacle and conditioning connector are mated with each other. For example, the conditioning receptacle can include a first conductive pathway that mates with the charge-carrying conductive pathway 410 of the conditioning connector, a separate, second conductive pathway that mates with the charge-carrying conductive pathway 412 of the conditioning connector, and a separate, third conductive pathway that mates with the grounding conductive pathway 414 of the conditioning connector.

As shown, the conditioning connector may concurrently mate (a) the conductive pathways of the conditioning connector with the conductive pathways of the pack side connector, (b) the charge-carrying conductive pathways in the conditioning connector with the charge-carrying conductive pathways in the conditioning receptacle, and (c) the grounding conductive pathway of the conditioning connector with the grounding conductive pathway of the pack side connector, the grounding conductive pathway of the system side connector, and the grounding conductive pathway of the conditioning receptacle.

The conditioning receptacle may be mounted onboard or inside the powered system such that the conditioning receptacle stays with the powered system. Alternatively, the conditioning receptacle may be mobile and able to be removed from and be moved separately from the powered system. The conditioning connector may be separate from the conditioning receptacle (but capable of being removably coupled and decoupled from the conditioning receptacle), or the conditioning connector and conditioning receptacle may be fixed together such that the conditioning connector and conditioning receptacle remain together.

In operation, the controller may disconnect power sources from the battery packs of the powered system automatically or by directing an operator to disconnect the power sources. The replaced battery pack can be removed, and the replacement battery pack installed in the powered system. The lower voltage or control connectors of the pack side connectors can be mated with the lower voltage or control connectors of the system side connectors. The conditioning connector can then be coupled with the charge-carrying, higher voltage connectors of the pack side connectors and with the charge-carrying, higher voltage connectors of the conditioning receptacle without connecting the conditioning connector with the charge-carrying, higher voltage connectors of the system side connectors. The grounding pathway of the conditioning connector can be connected with the grounding pathways of the pack side connector and the system side connector.

The conditioning connector can allow the controller to continue monitoring the replacement pack via signals communicated via the lower voltage or control conductive pathways in the pack side and system side connectors, while allowing the cells in this pack to be charged by a power source, such as an onboard power source (alternatively, an off-board power source can be used). The controller can then balance the companion packs and the replacement pack. For example, if the companion packs of the powered system are at an increased state of charge relative to the replacement pack, then the controller can direct the onboard power source or an off-board power source to charge the cells of the replacement pack to increase the state of charge of the replacement pack.

Optionally, the conditioning connector may be conductively coupled with a source of power other than the onboard or off-board power source. For example, the charge-carrying conductive pathways of the conditioning connector may be connected with another string of battery packs (e.g., the battery packs that power traction motor(s) of another axle of the powered system) via the bus, with a collector device that obtains power from an off-board source (e.g., a pantograph that receives energy from a catenary, a conductive shoe that receives energy from an electrified rail, a cable that couples with a utility grid, etc.), or the like. The power from one or more of these other sources can be used to charge the replacement pack. For example, the replacement pack can be charged via the conditioning connector by energy stored in battery packs in another string (e.g., string 302 or 304 while the replacement pack is in the string 300 shown in Figure 3), energy obtained from the propulsion system via dynamic braking, energy from a power source via the inverter coupled with the replacement pack and the corresponding motor, energy from an alternator or generator, or the like. The state of charge of the replacement pack can be increased until the states of charge of the companion packs and the replacement pack are the same or within a threshold difference of each other.

If the companion packs of the powered system are at a greater state of charge than the replacement pack, then the controller can direct or automatically discharge energy from the replacement pack using the conditioning connector until the states of charge of the replacement pack and the companion packs are brought closer together. For example, the conditioning connector can be coupled with the pack side connector of the replacement pack. Instead of also connecting the conditioning connector with the power source, however, the conditioning connector can be mated with a string of packs that includes the replacement pack via the bus of the powered system. This string may be the same string that includes the replacement pack or can be another string of packs of the powered system. For example, the conditioning connector can be mated with the replacement pack as described above, but one of the charge-carrying conductive pathways of the conditioning connector can also be coupled with one end of the string of packs and the other charge-carrying conductive pathway of the conditioning connector can also be coupled with an opposite end of the same string of packs (e.g., instead of connecting these charge-carrying conductive pathways with the conditioning receptacle).

The excess charge in the replacement pack can be discharged via the conditioning connector to a load, such as dynamic braking grids of the powered system to dissipate the excess charge as heat, a traction motor to dissipate the excess charge in powering the motor, an auxiliary load to dissipate the excess charge in powering the auxiliary load, an off-board power source (e.g., charging device) to discharge the excess charge, an inverter of a traction motor to discharge the excess charge, etc. The state of charge in the replacement pack can then be decreased to be closer to or match the companion packs in the same string (e.g., bring the states of charge to within the threshold difference of each other).

The controller can then direct or automatically disconnect and/or deactivate the power sources and/or the loads from the companion packs and the conditioning connector to keep the environment safe for operators. The conditioning connector can then be removed from between the pack side connector and the system side connector of the replacement pack, and from between the pack side connector of the replacement pack and the conditioning receptacle. The system side connector can be mated with the pack side connector of the replacement pack with the conditioning connector removed. The power source(s) and/or loads can then be connected or activated so that the power source(s) can conduct energy to the companion packs and the replacement packs via the higher voltage pack side and system side connectors, and the companion packs and the replacement packs can conduct stored energy to the loads via the higher voltage pack side and system side connectors.

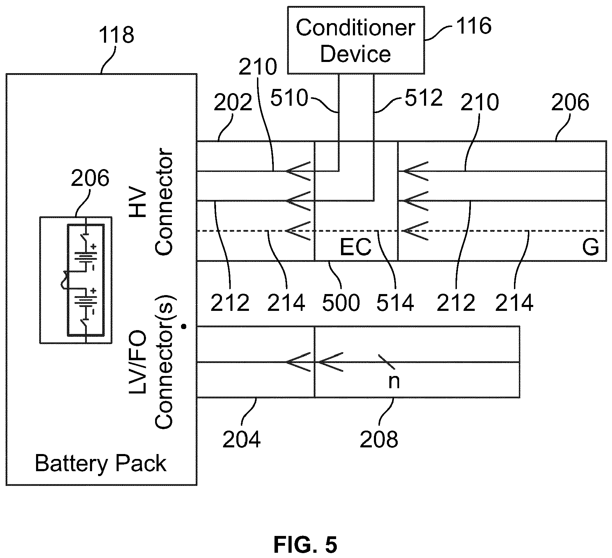

Figure 5 schematically illustrates another example of operation of the conditioning system shown in Figure 1. The conditioner device shown in Figure 1 may include an external conditioning connector 500, which may be off-board or outside the powered system. For example, the external conditioning connector may be part of or fixed to the conditioner device, which may include or represent the external or off-board power source, the onboard power source, an external or off-board passive conditioner device (described below), an external or off-board active conditioner device (described below), or the like.

The external conditioning connector may include the conductive pathways 510, 512, 514. The conducive pathways 510, 512 may be charge-carrying and/or higher voltage pathways that connect with the corresponding conductive pathways in the pack side connector. The conductive pathway 514 can mate with the grounding pathways in the pack side connector and in the system side connector to ensure that the pack remains grounded. Conductive pathways 510, 512 can conduct voltage or current from the off-board or external power source, while the conductive pathway 514 can connect with a ground reference.

The external conditioning connector may concurrently mate (a) the charge-carrying conductive pathways of the external conditioning connector with the charge-carrying conductive pathways of the pack side connector, (b) the charge-carrying conductive pathways in the external conditioning connector with charge-carrying conductive pathways of the external power source, and (c) the grounding conductive pathway of the external conditioning connector with the grounding conductive pathway of the pack side connector, and the grounding conductive pathway of the system side connector.

In operation, the controller may disconnect power sources from the battery packs of the powered system automatically or by directing an operator to disconnect the power sources. The replaced battery pack can be removed, and the replacement battery pack installed in the powered system. The lower voltage or control connectors of the pack side connectors can be mated with the lower voltage or control connectors of the system side connectors. The external conditioning connector can then be coupled with the pack side connector of the replacement pack to charge the replacement pack (if the replacement pack has a lower state of charge than the companion packs in the same string). Optionally, the external conditioning connector can be coupled with the pack side connector of a companion pack in the same string as the replacement pack to charge the companion pack (if the companion pack has a lower state of charge than the replacement pack in the same string). The grounding pathway of the external conditioning connector can be connected with the grounding pathways of the pack side connector and the system side connector.

The external conditioning connector can allow the controller to continue monitoring the replacement pack via signals communicated via the lower voltage or control conductive pathways in the pack side and system side connectors, while allowing the cells in the replacement pack or companion pack to be charged by the off-board power source. The controller can then balance the companion packs and the replacement pack. For example, if the companion packs of the powered system are at an increased state of charge relative to the replacement pack, then the controller can direct the off-board power source to charge the cells of the replacement pack to increase the state of charge of the replacement pack. If the replacement pack of the powered system is at an increased state of charge relative to the companion packs, then the controller can direct the off-board power source to charge the cells of the companion packs to increase the state of charge of the companion pack. This may occur by charging each companion pack separately, or by connecting several external conditioning connectors to the off-board power source for charging the companion packs at the same time. The charging may be performed to bring the states of charge of the replacement pack and the companion packs closer together (e.g., the same or within the threshold difference).

The off-board power source can be independently controlled by an operator or another controller. Optionally, the off-board power source can be monitored and/or controlled by the controller of the conditioning system by connecting the controller with the off-board power source. The off-board power source can be monitored and/or controlled to ensure that the pack(s) being charged are charged to the same or similar state of charge as the other pack(s) in the same string.

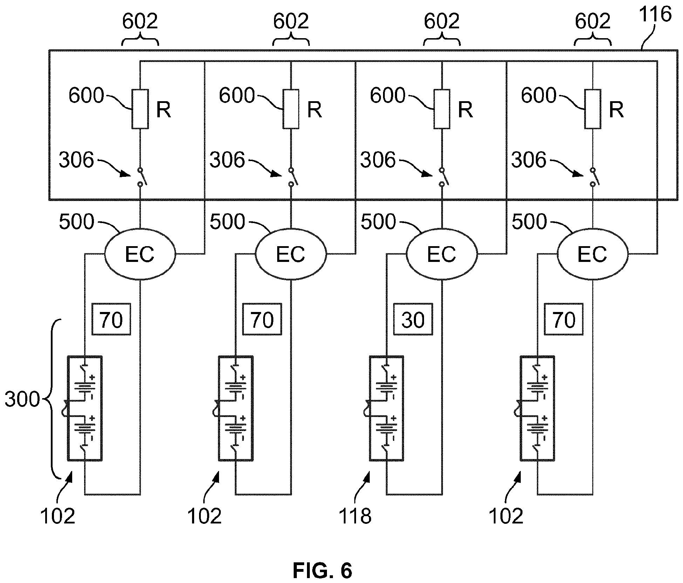

Figure 6 schematically illustrates another example of operation of the conditioning system shown in Figure 1. The conditioner device shown in Figure 1 may represent or include an external passive conditioning device 600, which may be off-board or outside the powered system. Optionally, the passive conditioning device may be onboard or inside the powered system. The passive conditioning device may be connected with several (or all) of the packs in the string having a pack that was replaced with the replacement pack.

The passive conditioning device may be connected with these packs by the external conditioning connectors described above. For example, the charge-carrying conductive pathways 510, 512 in the external conditioning connector may be connected with (a) the charge-carrying conductive pathways 210, 212 in the pack side connectors of the packs and (b) switching devices and resistive elements 600 of the passive conditioning device, as shown in Figure 6. The passive conditioning device may include each switching device in a series 602 with a resistive element, which can represent one or more resistors, loads, other packs, dynamic brake grids, or the like.

In operation, the controller can direct or automatically deactivate the loads and/or power sources before a replaced pack is removed and the replacement pack is installed, as described above. Each of the replacement pack and the companion packs in the same string may be connected to a different series of the switching device and resistive element in the passive conditioning device. Alternatively, fewer than all the replacement pack and the companion pack may be connected to a different series of the switching device and resistive element in the passive conditioning device. The passive conditioning device may include a controller, or the controller of the conditioning system, may control operation of the switching devices in the passive conditioning device to dissipate energy from the packs having greater states of charge.

For example, if the replacement pack has a state of charge of 30% and the companion packs in the same string have states of charge of 70%, then the passive conditioning device can be controlled or can control the switching devices in the passive conditioner device connected with the companion packs by the external conditioning connectors. These switching devices can be closed to conduct the excess charge in the companion packs to the resistive elements where the excess charge is dissipated or consumed. The switching device of the passive conditioner device that is connected with the replacement pack can be opened or remain open to prevent conduction of energy from the replacement pack. The controller can open the switching devices as the states of charge of the companion packs come closer to or match the state of charge of the replacement pack (e.g., 30%). Optionally, the controller can open these switching devices after a designated period of time has passed, after the electric current conducted out of the packs falls below a designated threshold, or the like. The passive conditioner device can then be disconnected from the packs.

Conversely, if the replacement pack has a greater state of charge than the companion packs in the same string, then the passive conditioning device can be controlled or can control the switching devices of the passive conditioning device that are connected with the replacement pack by the external conditioning connector. The switching device of the passive conditioning device that is connected with the replacement pack can be closed to conduct the excess charge in the replacement pack to the resistive element where the excess charge is dissipated or consumed. The controller can open the switching device as the state of charge of the replacement pack comes closer to or matches the states of charge of the companion packs. Optionally, the controller can open these switching devices after a designated period of time has passed, after the electric current conducted out of the packs falls below a designated threshold, or the like. The passive conditioner device can then be disconnected from the packs.

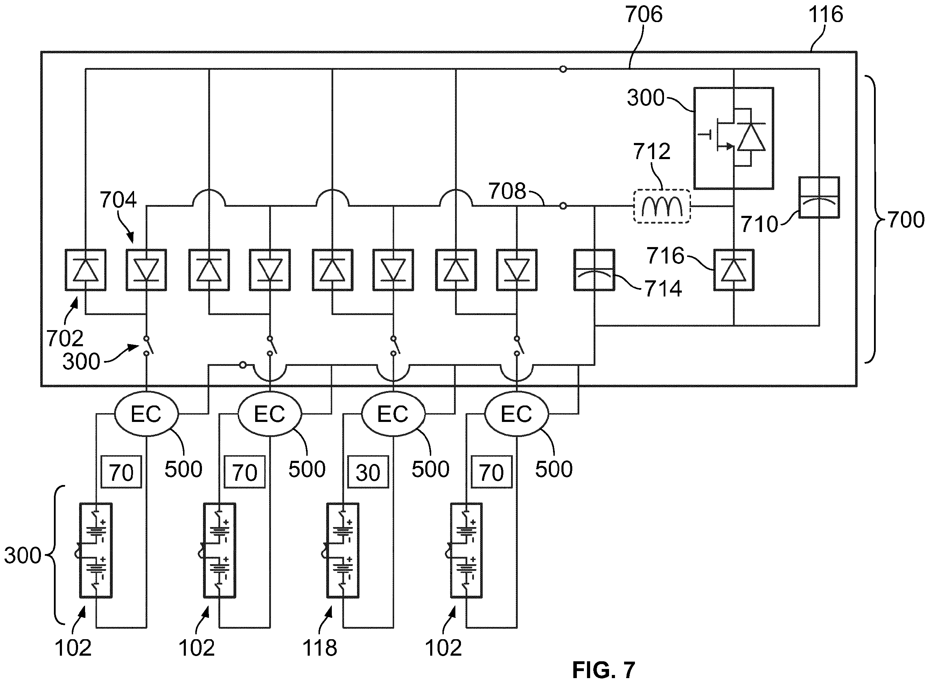

Figure 7 schematically illustrates another example of operation of the conditioning system shown in Figure 1. The conditioner device shown in Figure 1 may represent or include an external active conditioning device, which may be off-board or outside the powered system. Optionally, the active conditioning device may be onboard or inside the powered system. The active conditioning device may be connected with several (or all) of the packs in the string having a pack that was replaced with the replacement pack. In one example, the active conditioning device may not be connected with any power source other than the packs themselves. In another example, the active conditioning device may be connected with a power source other than the packs (described below).

The active conditioning device (with no external power source) may be connected with the packs in a string having the replacement pack by the external conditioning connectors described above. For example, the charge-carrying conductive pathways 510, 512 in the external conditioning connector may be connected with (a) the charge-carrying conductive pathways 210, 212 in the pack side connectors of the packs and (b) parallel diodes 702, 704 that can be connected with a direct current (DC)-to-DC converter device 700 of the active conditioning device. The converter device can include an input bus 706 and an output bus 708. A first capacitor 710 of the converter device can be connected with the input and output buses in parallel with a switching device 300 and another diode 716, as shown in Figure 7. An inductor 712 can be connected with the output bus of the converter device in a location between the switching device and the diode. A second capacitor 714 may be connected with the output bus and the external conditioning connectors in parallel to the other diode, also as shown in Figure 7.

In operation, the controller can direct and/or control the deactivation of the loads and/or power sources before a replaced pack is removed and the replacement pack is installed, as described above. The deactivation may be done automatically. Each of the replacement pack and the companion packs in the same string may be connected to a different set of the parallel diodes in the active conditioning device by a switching device in the active conditioning device. Alternatively, fewer than all the replacement pack and the companion pack may be connected with the active conditioning device. The active conditioning device may include a controller, or the controller of the conditioning system, may control operation of the switching devices that connect the external conditioning connector with the different sets of parallel diodes.

The converter device can be powered by the energy from the packs without any additional source of power in one example. The switching devices connecting the external conditioning connectors with the sets of parallel diodes may be closed. The pack having the greatest state of charge may conduct voltage to the converter device via the input bus. The converter device can store some of this charge in the first capacitor and output voltage that is the same as or similar to the lowest voltage of the lowest state of charge in the packs via the inductor (e.g., via the output bus). While some energy from the packs may be dissipated as heat or energy losses in the converter device, more of this energy is conserved and directed back to the lowest or lower state of charge packs (more than the passive conditioning device shown in Figure 6). The lower or lowest state of charge packs can be charged with the voltage output by the converter device onto the output bus. This can bring the states of charge of the packs in the string closer together or to the same value (or within the designated threshold difference). For example, the converter device can receive (along the input bus) the voltage conducted from the pack in the string having the greatest state of charge and can output (along the output bus) voltage onto the output bus that charges the packs having lower states of charge. Over time, this can bring the packs in the string to the same or similar state of charge. For example, if the replacement pack has a state of charge of 30% and the companion packs in the string have states of charge of 70%, over time the converter device may charge the replacement pack to a state of charge of 60% and may discharge the companion packs to states of charge of 60%. Conversely, if the companion packs have states of charge of 30% and the replacement pack in the string has a state of charge of 70%, over time the converter device may discharge the replacement pack to a state of charge of 60% and may charge the companion packs to states of charge of 60%.

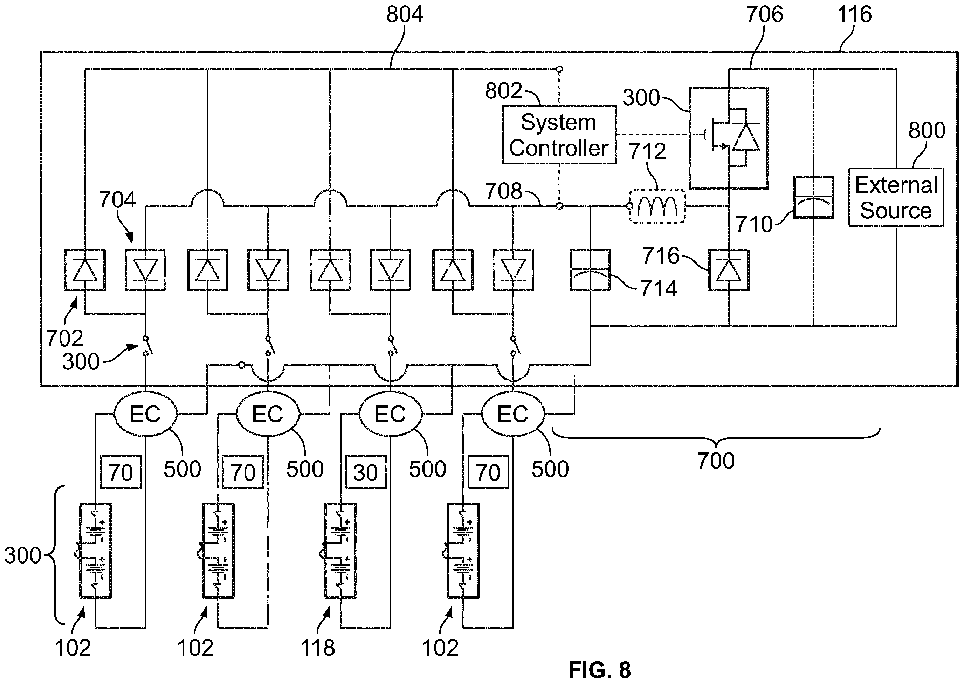

Figure 8 schematically illustrates another example of operation of the conditioning system shown in Figure 1. The conditioner device shown in Figure 1 may represent or include an external active conditioning device, which may be off-board or outside the powered system. Optionally, the active conditioning device may be onboard or inside the powered system. The active conditioning device may be connected with several (or all) of the packs in the string having a pack that was replaced with the replacement pack. In one example, the active conditioning device may be connected with a power source 800 ("External Source" in Figure 8) other than the packs themselves, such as the onboard or internal power sources and/or the external or off-board power sources.

The active conditioning device (with the external power source) may be connected with the packs in a string having the replacement pack by the external conditioning connectors described above. For example, the charge-carrying conductive pathways 510, 512 in the external conditioning connector may be connected with (a) the charge-carrying conductive pathways 210, 212 in the pack side connectors of the packs and (b) the set of parallel diodes 702, 704 that can be connected with the converter device 700 of the active conditioning device.

The input bus of the converter device may be connected with the power source 800 as shown in Figure 8. The first capacitor of the converter device can be connected with the input and output buses in parallel with the switching device and the other diode 716, as shown in Figure 8. The inductor can be connected with the output bus of the converter device in a location between the switching device and the diode. The second capacitor 714 may be connected with the output bus and the external conditioning connectors in parallel to the other diode, also as shown in Figure 8.

A conditioning device controller 802 may be connected with another input bus 804 that connects the sets of diodes and the packs with the output bus of the converter device. This system controller also may be connected with a gate of the switching device of the converter device to control operation of that switching device, as shown in Figure 8. The system controller can represent hardware circuitry that includes and/or is connected with one or more processors that perform the operations of the system controller as described herein. The system controller can communicate with the controller of the powered system for control of the switching device of the converter device. Optionally, the system controller can control the switching device based on the states of charge of the packs (which can be sensed by sensors in the packs, external sensors, or otherwise), based on operator feedback, or the like.

In operation, the controller 114 and/or 802 can direct or automatically deactivate the loads and/or power sources before a replaced pack is removed and the replacement pack is installed, as described above. Each of the replacement pack and the companion packs in the same string may be connected to a different set of the parallel diodes in the active conditioning device shown in Figure 8 by a switching device in the active conditioning device. Alternatively, fewer than all the replacement pack and the companion pack may be connected with the active conditioning device. The controller 114 and/or 802 may control operation of the switching devices that connect the external conditioning connector with the different sets of parallel diodes.

The converter device can be powered by energy from the external power source 800 and not the packs themselves. Alternatively, the converter device may receive some energy from the packs themselves. The switching devices connecting the external conditioning connectors with the sets of parallel diodes may be closed. The external power source can supply to the converter device via the input bus. The converter device can store some of this charge in the first capacitor and output voltage that is the same as or similar to the lowest voltage of the lowest state of charge in the packs via the inductor (e.g., via the output bus) The lower or lowest state of charge packs can be charged with the voltage output by the converter device onto the output bus. This can bring the states of charge of the packs in the string closer together or to the same value (or within the designated threshold difference). For example, the converter device can receive (along the input bus) the voltage conducted from the external power source and can output voltage onto the output bus that charges the packs having lower states of charge. Over time, this can charge the lower state of charge pack(s) and bring the packs in the string to the same or similar state of charge. For example, if the replacement pack has a state of charge of 30% and the companion packs in the string have states of charge of 70%, over time the converter device may charge the replacement pack to a state of charge of 70% without the state of charge of the companion packs significantly dropping (e.g., decreasing by more than losses in the converter device).

The external conditioner device may communicate with the controller of the powered system to control changing of the states of charge of the packs in a string. For example, the powered system controller can communicate with the conditioning device controller to communicate an identification of the powered system, the load(s) powered by a string (e.g., an axle number indicating an axle that is rotated by motor(s) powered by the string that includes the replacement pack), an identification of the string having the replacement pack, an identification of the replacement pack itself, etc. The conditioning device controller can then control the active conditioning device to bring the replacement pack (or another identified pack, such as a companion pack) up to the state of charge of the other packs in the same string using the information communicated between the controllers.

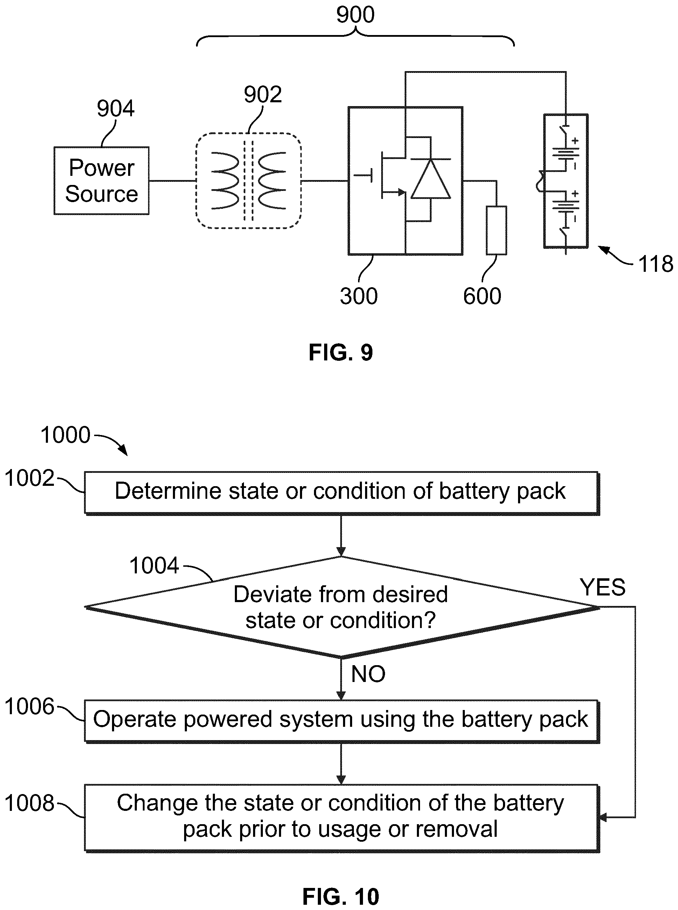

Figure 9 schematically illustrates another example of operation of the conditioning system shown in Figure 1. The conditioner device shown in Figure 1 may represent or include an external balancing device 900, which may be off-board or outside the powered system. Optionally, the balancing device may be onboard or inside the powered system. The balancing device may be connected with a pack in a string to charge or discharge the pack and bring the state of charge of that pack to match the state of charge of other packs in the same string.

The balancing device may include an electric isolation device 902 that can transfer power from one or more power sources 904 (which can represent the onboard and/or external power sources described herein) to a base terminal of a switching device 300 of the balancing device. An emitter or output terminal of the switching device can be connected with an energy sink, such as one or more resistive elements 600. A collector terminal of the switching device can be connected with the pack being charged by the power source. The isolation device can be a transformer or other inductive device that can transfer power between the power source and the switching device without conducting the power through or across the isolation device via conduction in a conductive body.

In operation, the packs in a string are disconnected from power sources and/or loads, as described above. The state of charge of the pack being conditioned can be measured or determined, a capacity of the pack being conditioned (e.g., a maximum charging amount) can be measured or determined, and/or a state of health of the pack being conditioned can be determined. For a pack having a state of charge that is less than the state of charge of other packs in the same string, the switching device can be controlled by one or more of the controllers described herein to direct voltage from the power source to the pack. For a pack having a state of charge that exceeds the state of charge of other packs in the same string, the switching device can be controlled by one or more of the controllers described herein to direct voltage from the power source to the resistive element to dissipate the excess charge. Once the state of charge of the pack is brought closer to or matches the state of charge of the other packs in the string, the conditioning may end, and the balancing device can be removed from the pack. One or more sensors that measure the temperature and/or one or more cooling systems may be used to monitor and maintain the pack being conditioned to within acceptable limits.

While the examples described above relate to conditioning packs by changing states of charge of the packs, the conditioning system optionally can change another characteristic of the packs, such as the temperature of the packs. The battery cells in the packs may operate differently, have different capacities, have different charging or discharging rates, etc. depending on the temperature of the battery cells. One or more embodiments of the conditioning systems described herein may heat replacement packs that are colder than the companion packs in the same string, may heat companion packs that are colder than the replacement pack in the same string, may cool replacement packs that are warmer than the companion packs in the same string, and/or may cool companion packs that are warmer than the replacement pack in the same string. The conditioner or conditioning devices described herein optionally may generate heat or may absorb heat to alternately heat or cool the packs to desired temperatures or within desired temperature ranges.

With respect to the battery pack that is removed (e.g., the replaced battery pack), the pack may lose the benefit of various protections provided by the powered system. These protections can include safe venting of thermal runaway events, an arc flash resistant enclosure, BMS cell thermal and voltage monitoring, BMS pack sensor monitoring (e.g., of temperature), etc. Because of this and the desire to limit how much energy is stored in the replaced pack for safe shipment and handling, there may be a need to limit the state of charge of the pack that is removed from the powered system (e.g., to no greater than a threshold state of charge, such as 30% or 10%). This can protect against the pack entering a fully discharged state (that may be damaging to the pack) caused by self-discharge while in storage or transport. Another threshold state of charge that a removed pack may be lowered or charged to may be the same state of charge as the packs in a string that the removed pack may later be installed into.

For removal of a battery pack, one or more embodiments of the conditioning system described herein may condition a battery pack for removal by changing the state of charge of the pack (by charging or discharging) to the threshold state of charge (e.g., 10%, 30%, or another value). The conditioning process may be initiated by a maintenance personnel, can be automatically performed by the powered system in anticipation of pack removal due to an on-board or off-board detected event, etc.

For example, the powered system may have all or many battery packs at a state of charge of 70%, but one of these packs may need to be removed for maintenance, sensor failure, needed modifications to the pack, a recall of the pack, a contactor of the pack becoming welded closed, etc. The pack being removed can be charged (or discharged) as described herein until the pack reaches the designated threshold state of charge, such as 30%. The replacement pack can then be installed and charged (or discharged) to the same state of charge or a state of charge within the threshold difference as the companion packs in the same string, as described herein.

Figure 10 illustrates a flowchart of one example of a method 1000 for conditioning one or more energy storage packs. The method can represent operations performed in connection with one or more examples of the conditioning systems described herein. At step 1002, the state or condition of a pack can be determined. This state or condition may include a state or charge, a temperature, or the like. At step 1004, a decision can be made as to whether the state or condition of the pack deviates from a desired state or condition. For example, a decision can be made as to whether the pack has a different state of charge than companion packs in the same string as the pack. As another example, a decision can be made as to whether the pack has a different temperature than companion packs in the same string as the pack.

If the state or condition of the pack does not deviate from the desired state or condition, then the pack may not need to be conditioned to change the state or condition of the pack. As a result, flow of the method can proceed toward step 1006. At step 1006, the pack is used to power one or more loads of the powered system. Flow of the method can then terminate or return to a prior operation, such as step 1002.

If the state or condition of the pack deviates from the desired state or condition at step 1004, then the pack may need to be conditioned to change the state or condition of the pack. As a result, flow of the method can proceed toward step 1008. At step 1008, the state or condition of the pack is changed. For example, the state of charge of the pack may be increased or decreased to match or be closer to the state of charge of the companion packs in the same string. As another example, the temperature of the pack may be increased or decreased to match or be closer to the temperature of the companion packs in the same string. Flow of the method can then terminate or return to a prior operation, such as step 1002.

In one embodiment, the control system may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the controller may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model is selected, and the vehicle controller executes that plan to achieve the desired input data to mirror the predicted best outcome scenario. Additionally, the success metric may be a combination of optimized outcomes, which may be weighed relative to each other.

The controller can use this artificial intelligence or machine learning to receive input (e.g., a state or condition of a battery pack), use a model that associates different states or conditions with ways to condition the battery pack (to change the state or condition) to select a process for changing the state or condition of the battery back (as described herein), and then provide an output (e.g., the selected technique for changing the state or condition). The controller may receive additional input of the selected technique, such as analysis of operation of the battery pack following changing the state or condition of the battery pack, operator input, or the like, that indicates whether the machine-selected technique provided a desirable outcome or not. Based on this additional input, the controller can change the model, such as by changing which technique would be selected when a similar or identical state or condition of a battery pack is received the next time or iteration. The controller can then use the changed or updated model again to select a conditioning process or technique, receive feedback on the selected process or technique, change or update the model again, etc., in additional iterations to repeatedly improve or change the model using artificial intelligence or machine learning.

In one embodiment, the first battery pack of the plurality of battery packs that form a battery bank may be selected for removal from the bank. A removal time may be selected. The controller may initiate one or more of the following actions, and this may be done prior to removal of the first battery from the bank. The controller may selectively control the first battery pack to a relatively lower state-of-charge (SoC), such as a zero or near-zero state of charge. The controller may do this by isolating the first battery pack from the rest of the plurality of battery packs so that the bank, less the first battery pack, has a higher or non-zero SOC. The controller may do this by draining or using the stored electrical power of the entire bank so that the bank's SoC is zero or near-zero. The controller may do this by selectively not charging the first battery pack, even though the rest of the battery packs in the bank are being charged. In one embodiment, the controller may control the temperature of the first battery pack to be at ambient or about-ambient at or before the removal time. The controller may selectively not charge, or may not discharge, the first battery pack to avoid heat generation or at a rate (or at a time) that allows sufficient heat dissipation to achieve a determined temperature of the first battery pack at a determined time. The controller further may control a fan or thermal management device (e.g., a fluidic heat transfer system) to achieve the determined temperature at the determined time. In one embodiment, the controller may simultaneously drain the first battery pack by using its stored electrical power to run the thermal management system, and thereby to both reduce the SoC and the temperature at a rate that gets to a determine SoC and temperature in a determined time frame. Optionally, indicators may show the first battery packs SoC and/or the temperature so that removal can be done with relatively lower risk of shock or burning. Because the first battery pack may still be useful to operations even after being selected for removal, the controller may allow the use of the first battery pack in operation until a period before actual removal, in which case the controller may initiate a reduction in the SoC, block charging, avoid charging or discharging (or control the rate) to allow the first battery pack to cool, and/or activate the thermal management system to bring the first battery pack's temperature close to ambient.

With regard to the installation of the replacement battery pack, in one embodiment, the controller may allow equilibration of temperature of the replacement battery pack with the rest of the plurality of packs prior to applying a full load to it. In one embodiment, the controller will cause the replacement battery pack to achieve an equivalent or about equivalent SoC with the rest of the battery packs in the bank prior to applying a full load to it.

A method is provided that may include identifying a first battery pack of plural battery packs to be removed from a vehicle based at least in part on a measured state of charge of the first battery pack, and conditioning one or more of the first battery pack for removal from the vehicle or a replacement battery pack for installation on the vehicle by one or more of (a) changing the state of charge of the first battery pack or the replacement battery pack to be closer to the state of charge of one or more other battery packs of the vehicle or closer to a threshold state of charge, and/or (b) connecting a bypass connector with the replacement battery pack between the replacement battery pack and a power source that also is connected with the one or more other battery packs on the vehicle. The bypass connector may bypass one or more of (c) charging energy from the power source to the replacement battery pack while the power source charges the one or more other battery packs to increase the state of charge of the one or more other battery packs toward the state of charge of the replacement battery pack, and/or (d) discharging energy from the replacement battery pack to a load of the vehicle while the one or more other battery packs discharge energy to the load of the vehicle to reduce the state of charge of the one or more other battery packs toward the state of charge of the replacement battery pack.

Optionally, conditioning the one or more of the first battery pack or the replacement battery pack may include connecting a conditioning connector with a bus to which the replacement battery pack and the one or more other battery packs are connected in series. The conditioning connector may couple the replacement battery pack with one or more of an off-board power source for charging the replacement battery pack to increase the state of charge of the replacement battery pack toward the state of charge of the one or more other battery packs, and/or a load of the vehicle for discharging the replacement battery pack using the load to reduce the state of charge of the replacement battery pack toward the state of charge of the one or more other battery packs. Conditioning the one or more of the first battery pack or the replacement battery pack may include connecting an external charging device with the replacement battery pack to increase the state of charge of the replacement battery pack toward the state of charge of the one or more other battery packs.

Conditioning the one or more of the first battery pack or the replacement battery pack may include connecting the replacement battery pack and the one or more other battery packs to an external passive conditioner device having resistive elements. The resistive elements of the external passive conditioner device may consume energy stored in one or more of the replacement battery pack or the one or more other battery packs to bring the states of charge of the replacement battery pack and the one or more other battery packs closer together.

Conditioning the one or more of the first battery pack or the replacement battery pack may include connecting the replacement battery pack and the one or more other battery packs to an active passive conditioner device that one or more of shares energy stored in the replacement battery pack and the one or more other battery packs to bring the states of charge of the replacement battery pack and the one or more other battery packs closer together, and/or charges the replacement battery pack or the one or more other battery packs with an external power source.

Conditioning the one or more of the first battery pack or the replacement battery pack may include changing the state of charge of the replacement battery pack using an off-board conditioner device prior to installing the replacement battery pack onboard the vehicle to bring the state of charge of the replacement battery pack and the state of charge of the one or more other battery packs closer together before installing the replacement battery pack. Conditioning the one or more of the first battery pack or the replacement battery pack may include transferring energy stored in the first battery pack to the one or more other battery packs to reduce the state of charge of the first battery pack closer to a removal threshold state of charge. Conditioning the one or more of the first battery pack or the replacement battery pack may include transferring energy stored in the one or more other battery packs to the first battery pack to increase the state of charge of the first battery pack closer to a removal threshold state of charge.

A conditioning system also is provided that may include a controller that can measure a state of charge of battery packs onboard a vehicle and identify a first battery pack of the battery packs to be removed from the vehicle and replaced with a replacement battery pack, and a conditioning device that may change a state of charge of one or more of the first battery pack for removal from the vehicle or the replacement battery pack for installation on the vehicle, the conditioning device configured to change the state of charge of the first battery pack or the replacement battery pack to be closer to the state of charge of one or more other battery packs of the battery packs onboard the vehicle or closer to a threshold state of charge.

The conditioning device may include a bypass connector that can be coupled with the replacement battery pack between the replacement battery pack and a power source that also can be connected with the one or more other battery packs on the vehicle. The bypass connector may bypass one or more of (a) charging energy from the power source to the replacement battery pack while the power source charges the one or more other battery packs to increase the state of charge of the one or more other battery packs toward the state of charge of the replacement battery pack and/or (b) discharging energy from the replacement battery pack to a load of the vehicle while the one or more other battery packs discharge energy to the load of the vehicle to reduce the state of charge of the one or more other battery packs toward the state of charge of the replacement battery pack.

The conditioning device may include a conditioning connector that can be coupled with a bus to which the replacement battery pack and the one or more other battery packs are connected in series. The conditioning connector may couple the replacement battery pack with one or more of (a) an off-board power source for charging the replacement battery pack to increase the state of charge of the replacement battery pack toward the state of charge of the one or more other battery packs, and/or (b) a load of the vehicle for discharging the replacement battery pack using the load to reduce the state of charge of the replacement battery pack toward the state of charge of the one or more other battery packs.

The conditioning device may include an external charging device that can be coupled with the replacement battery pack to increase the state of charge of the replacement battery pack toward the state of charge of the one or more other battery packs. The conditioning device may include an external passive conditioner device having resistive elements that can consume energy stored in one or more of the replacement battery pack or the one or more other battery packs to bring the states of charge of the replacement battery pack and the one or more other battery packs closer together.

The conditioning device may include an active passive conditioner device that can one or more of (a) share energy stored in the replacement battery pack and the one or more other battery packs to bring the states of charge of the replacement battery pack and the one or more other battery packs closer together, and/or (b) charge the replacement battery pack or the one or more other battery packs with an external power source.

The conditioning device may include an off-board conditioner device that can change the state of charge of the replacement battery pack prior to installing the replacement battery pack onboard the vehicle to bring the state of charge of the replacement battery pack and the state of charge of the one or more other battery packs closer together before installing the replacement battery pack. The conditioning device may transfer energy stored in the first battery pack to the one or more other battery packs to reduce the state of charge of the first battery pack closer to a removal threshold state of charge. The conditioning device may transfer energy stored in the one or more other battery packs to the first battery pack to increase the state of charge of the first battery pack closer to a removal threshold state of charge.

A conditioning system also is provided that may include a controller that can measure a state of charge of battery packs onboard a vehicle and identify a first battery pack of the battery packs to be removed from the vehicle and replaced with a replacement battery pack, and a conditioning device that may change a state of charge of one or more of the first battery pack for removal from the vehicle or the replacement battery pack for installation on the vehicle. The conditioning device may change the state of charge of the first battery pack or the replacement battery pack to be closer to the state of charge of one or more other battery packs of the battery packs onboard the vehicle or closer to a threshold state of charge.

The conditioning device may include one or more of a bypass connector, a conditioning connector, an external charging device, an external passive conditioner device, an active passive conditioner device, and/or an off-board conditioner device.

The bypass connector can be coupled with the replacement battery pack between the replacement battery pack and a power source that also can be connected with the one or more other battery packs on the vehicle. The bypass connector may bypass one or more of (a) charging energy from the power source to the replacement battery pack while the power source charges the one or more other battery packs to increase the state of charge of the one or more other battery packs toward the state of charge of the replacement battery pack and/or (b) discharging energy from the replacement battery pack to a load of the vehicle while the one or more other battery packs discharge energy to the load of the vehicle to reduce the state of charge of the one or more other battery packs toward the state of charge of the replacement battery pack.

The conditioning connector may be coupled with a bus to which the replacement battery pack and the one or more other battery packs are connected in series. The conditioning connector can couple the replacement battery pack with one or more of (c) an off-board power source for charging the replacement battery pack to increase the state of charge of the replacement battery pack toward the state of charge of the one or more other battery packs, or (d) a load of the vehicle for discharging the replacement battery pack using the load to reduce the state of charge of the replacement battery pack toward the state of charge of the one or more other battery packs.

The external charging device may be coupled with the replacement battery pack to increase the state of charge of the replacement battery pack toward the state of charge of the one or more other battery packs. The external passive conditioner device can have resistive elements that may consume energy stored in one or more of the replacement battery pack or the one or more other battery packs to bring the states of charge of the replacement battery pack and the one or more other battery packs closer together.

The active passive conditioner device may one or more of (e) share energy stored in the replacement battery pack and the one or more other battery packs to bring the states of charge of the replacement battery pack and the one or more other battery packs closer together, and/or (f) charge the replacement battery pack or the one or more other battery packs with an external power source. The off-board conditioner device may change the state of charge of the replacement battery pack prior to installing the replacement battery pack onboard the vehicle to bring the state of charge of the replacement battery pack and the state of charge of the one or more other battery packs closer together before installing the replacement battery pack.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

As used herein, an element or step recited in the singular and preceded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. This written description uses examples to disclose and describe several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method comprising:
identifying a first battery pack (118) of plural battery packs (118) to be removed from a vehicle (104) based at least in part on a measured state of charge of the first battery pack (118); and
conditioning one or more of the first battery pack (118) for removal from the vehicle (104) or a replacement battery pack (118) for installation on the vehicle (104) by one or more of:
changing the state of charge of the first battery pack (118) or the replacement battery pack (118) to be closer to the state of charge of one or more other battery packs (118) of the vehicle (104) or closer to a threshold state of charge; or
connecting a bypass connector (200) with the replacement battery pack (118) between the replacement battery pack (118) and a power source (112, 122) that also is connected with the one or more other battery packs (118) on the vehicle (104), the bypass connector (200) bypassing one or more of (a) charging energy from the power source (112, 122) to the replacement battery pack (118) while the power source (112, 122) charges the one or more other battery packs (118) to increase the state of charge of the one or more other battery packs (118) toward the state of charge of the replacement battery pack, or (b) discharging energy from the replacement battery pack (118) to a load (106, 110, 120) of the vehicle (104) while the one or more other battery packs (118) discharge energy to the load (106, 110, 120) of the vehicle (104) to reduce the state of charge of the one or more other battery packs (118) toward the state of charge of the replacement battery pack (118).

2. The method of claim 1, wherein conditioning the one or more of the first battery pack (118) or the replacement battery pack (118) includes connecting a conditioning connector (400) with a bus (308) to which the replacement battery pack (118) and the one or more other battery packs (118) are connected in series, the conditioning connector (400) coupling the replacement battery pack (118) with one or more of (a) an off-board power source (112, 122) for charging the replacement battery pack (118) to increase the state of charge of the replacement battery pack (118) toward the state of charge of the one or more other battery packs (118), or (b) a load (106, 110, 120) of the vehicle (104) for discharging the replacement battery pack (118) using the load (106, 110, 120) to reduce the state of charge of the replacement battery pack (118) toward the state of charge of the one or more other battery packs (118).

3. The method of claim 1, wherein conditioning the one or more of the first battery pack (118) or the replacement battery pack (118) includes connecting an external charging device with the replacement battery pack (118) to increase the state of charge of the replacement battery pack (118) toward the state of charge of the one or more other battery packs (118).

4. The method of claim 1, wherein conditioning the one or more of the first battery pack (118) or the replacement battery pack (118) includes connecting the replacement battery pack (118) and the one or more other battery packs (118) to an external passive conditioner device (600) having resistive elements, the resistive elements of the external passive conditioner device (600) consuming energy stored in one or more of the replacement battery pack (118) or the one or more other battery packs (118) to bring the state of charge of the replacement battery pack (118) and the state of charge of the one or more other battery packs (118) closer together.

5. The method of claim 1, wherein conditioning the one or more of the first battery pack (118) or the replacement battery pack (118) includes connecting the replacement battery pack (118) and the one or more other battery packs (118) to an active conditioner device (116) that one or more of (a) shares energy stored in the replacement battery pack (118) and the one or more other battery packs (118) to bring the states of charge of the replacement battery pack (118) and the one or more other battery packs (118) closer together, or (b) charges the replacement battery pack (118) or the one or more other battery packs (118) with an external power source (112, 122).

6. The method of claim 1, wherein conditioning the one or more of the first battery pack (118) or the replacement battery pack (118) includes changing the state of charge of the replacement battery pack (118) using an off-board conditioner device (116) prior to installing the replacement battery pack (118) onboard the vehicle (104) to bring the state of charge of the replacement battery pack (118) and the state of charge of the one or more other battery packs (118) closer together before installing the replacement battery pack (118).

7. The method of claim 1, wherein conditioning the one or more of the first battery pack (118) or the replacement battery pack (118) includes transferring energy stored in the first battery pack (118) to the one or more other battery packs (118) to reduce the state of charge of the first battery pack (118) closer to a removal threshold state of charge.

8. The method of claim 1, wherein conditioning the one or more of the first battery pack (118) or the replacement battery pack (118) includes transferring energy stored in the one or more other battery packs (118) to the first battery pack (118) to increase the state of charge of the first battery pack (118) closer to a removal threshold state of charge.

9. A conditioning system comprising:
a controller (114) configured to measure a state of charge of battery packs (118) onboard a vehicle (104) and identify a first battery pack (118) of the battery packs (118) to be removed from the vehicle (104) and replaced with a replacement battery pack (118); and
a conditioning device (116) configured to change a state of charge of one or more of the first battery pack (118) for removal from the vehicle (104) or the replacement battery pack (118) for installation on the vehicle (104), the conditioning device (116) configured to change the state of charge of the first battery pack (118) or the replacement battery pack (118) to be closer to the state of charge of one or more other battery packs (118) of the battery packs (118) onboard the vehicle (104) or closer to a threshold state of charge.

10. The conditioning system of claim 9, wherein the conditioning device (116) includes a bypass connector (200) configured to be coupled with the replacement battery pack (118) between the replacement battery pack (118) and a power source (112, 122) that also is connected with the one or more other battery packs (118) on the vehicle (104), the bypass connector (200) configured to bypass one or more of (a) charging energy from the power source (112, 122) to the replacement battery pack (118) while the power source (112, 122) charges the one or more other battery packs (118) to increase the state of charge of the one or more other battery packs (118) toward the state of charge of the replacement battery pack (118) or (b) discharging energy from the replacement battery pack (118) to a load (106, 110, 120) of the vehicle (104) while the one or more other battery packs (118) discharge energy to the load (106, 110, 120) of the vehicle (104) to reduce the state of charge of the one or more other battery packs (118) toward the state of charge of the replacement battery pack (118).

11. The conditioning system of claim 9, wherein the conditioning device (116) includes a conditioning connector (400) configured to be coupled with a bus (308) to which the replacement battery pack (118) and the one or more other battery packs (118) are connected in series, the conditioning connector (400) configured to couple the replacement battery pack (118) with one or more of (a) an off-board power source (112, 122) for charging the replacement battery pack (118) to increase the state of charge of the replacement battery pack (118) toward the state of charge of the one or more other battery packs (118), or (b) a load (106, 110, 120) of the vehicle (104) for discharging the replacement battery pack (118) using the load (106, 110, 120) to reduce the state of charge of the replacement battery pack (118) toward the state of charge of the one or more other battery packs (118).

12. The conditioning system of claim 9, wherein the conditioning device (116) includes an external charging device configured to be coupled with the replacement battery pack (118) to increase the state of charge of the replacement battery pack (118) toward the state of charge of the one or more other battery packs (118).

13. The conditioning system of claim 9, wherein the conditioning device (116) includes an external passive conditioner device (600) having resistive elements configured to consume energy stored in one or more of the replacement battery pack (118) or the one or more other battery packs (118) to bring the states of charge of the replacement battery pack (118) and the one or more other battery packs (118) closer together.

14. The conditioning system of claim 9, wherein the conditioning device (116) includes an active conditioner device (116) configured to one or more of (a) share energy stored in the replacement battery pack (118) and the one or more other battery packs (118) to bring the states of charge of the replacement battery pack (118) and the one or more other battery packs (118) closer together, or (b) charge the replacement battery pack (118) or the one or more other battery packs (118) with an external power source (112, 122).

15. The conditioning system of claim 9, wherein the conditioning device (116) includes an off-board conditioner device (116) configured to change the state of charge of the replacement battery pack (118) prior to installing the replacement battery pack (118) onboard the vehicle (104) to bring the state of charge of the replacement battery pack (118) and the state of charge of the one or more other battery packs (118) closer together before installing the replacement battery pack (118).
